# EUROPEAN PATENT APPLICATION

(11) **EP 3 737 016 A1**
(43) Date of publication of application: **11.11.2020**
(21) Application number: 19743300.6
(22) Date of filing: 17.01.2019
(51) Int. Cl.: H04L 1/16

(54) **DATA TRANSMISSION METHOD, APPARATUS AND SYSTEM**

(30) Priority: 25.01.2018 CN 201810073548
(71) Applicant: HUAWEI TECHNOLOGIES CO., LTD., Shenzhen, Guangdong 518129, (CN)
(72) Inventor: WEI, Anni, Shenzhen, Guangdong 518129 (CN); CHAN, Hinghung Anthony, Shenzhen, Guangdong 518129 (CN); XIONG, Chunshan, Shenzhen, Guangdong 518129 (CN)
(74) Representative: Goddar, Heinz J.
(86) International application number: PCT/CN2019/072180
(87) International publication number: WO 2019/144836

(57) **Abstract**

This application relates to the field of communications technologies, and discloses a data transmission method, apparatus, and system. The method includes: generating a plurality of QUIC data packets, where each QUIC data packet includes a QUIC connection identifier and packet indication information, and the QUIC connection identifiers in the plurality of QUIC data packets are the same; and sending the plurality of QUIC data packets on at least two paths, where the packet indication information in each QUIC data packet is used to indicate a packet number of the QUIC data packet on a transmission path. Data packets on two paths for transmitting data of a same QUIC connection are separately numbered, so that a receive end can determine a transmission status of a data packet on each path, and data transmission is not affected by different transmission conditions of different paths.

## Description

This application claims priority to Chinese Patent Application No. 201810073548.7, filed on January 25, 2018 and entitled "DATA TRANSMISSION METHOD, APPARATUS, AND SYSTEM", which is incorporated herein by reference in its entirety.

### TECHNICAL FIELD

This application relates to the field of communications technologies, and in particular, to a data transmission method, apparatus, and system.

### BACKGROUND

QUIC (Quick UDP (User Datagram Protocol, user datagram protocol) Internet Connection, quick UDP internet connection) is a transmission protocol that is based on UDP and that implements multiplexing and security protection. When needing to transmit data by using a QUIC connection, a transmit end needs to first establish the QUIC connection to a receive end, and then processes the to-be-transmitted data to generate a plurality of QUIC data packets that need to be transmitted by using the QUIC connection. A packet header of each QUIC data packet carries a data packet number. Finally, the transmit end sends, by using the established QUIC connection, the QUIC data packets to the receive end in ascending order of the data packet numbers. After receiving a QUIC data packet sent by the transmit end, the receive end replies to the transmit end with an acknowledgment (ACK) packet. The acknowledgment packet is used to indicate the QUIC data packet received by the receive end. When the receive end cannot receive, within a particular time period, all the QUIC data packets that are sequentially transmitted, the receive end cannot accurately determine whether a QUIC data packet that is not received is lost. Consequently, transmission performance is affected.

### SUMMARY

To resolve a prior-art problem that a receive end cannot accurately determine whether a data packet is lost, this application provides a data transmission method, apparatus, and system. The technical solutions are as follows:

According to a first aspect, a data transmission method is provided. The method includes: generating a plurality of QUIC data packets, where each QUIC data packet includes a QUIC connection identifier and packet indication information, and the QUIC connection identifiers in the plurality of QUIC data packets are the same; and sending the plurality of QUIC data packets on at least two paths, where the packet indication information in each QUIC data packet is used to indicate a packet number of the QUIC data packet on a transmission path.

When the QUIC connection identifiers in the plurality of QUIC data packets are the same, it indicates that data of all the QUIC data packets are transmitted by using a same QUIC connection. In this application, data transmitted by using the same QUIC connection is transmitted on at least two paths, and data packets transmitted on each path are all numbered, so that a receive end can accurately determine a transmission status of a data packet on each path, and data transmission is not affected by different transmission conditions of different paths.

During actual application, each QUIC connection is generally used to transmit data of a plurality of streams. Therefore, when the plurality of QUIC data packets are generated, a transmission path for each stream needs to be determined. Therefore, in some embodiments, the generating a plurality of QUIC data packets includes: obtaining to-be-transmitted data, where the to-be-transmitted data includes data of at least two streams of the QUIC connection; determining a transmission path for data of each stream; and adding, to data of streams whose transmission paths are the same, QUIC data packet headers carrying a same path identifier, to obtain the QUIC data packets.

The transmission path for the data of each stream may be determined in either of the following two manners:
Manner 1: Determine whether the streams are related to each other; and determine transmission paths of data of related streams as a same path.
Manner 2: Determine a transmission performance requirement of each stream, where the transmission performance requirement includes at least one of a transmission delay, a packet loss rate, or a bit error rate; and determine the transmission path for the data of each stream based on the transmission performance requirement of the stream.

In the manner 1, the data of the related streams is transmitted on a same path. In other words, transmission paths of data of a plurality of related streams are determined as a same path. This may reduce impact of different transmission performance of different paths on data use. In the manner 2, based on the transmission performance requirement, of each stream, on the transmission path, a path that can meet a requirement of the stream is selected for the stream as the transmission path. This can improve overall data transmission performance.

Further, the determining whether the streams are related to each other includes: determining, based on an identifier carried in the data of each stream, whether the streams are related to each other; or determining, according to each preset association rule, whether the streams are related to each other.

Optionally, the method further includes: receiving an acknowledgment packet sent by a receive end, where the acknowledgment packet is used to indicate a data packet received by the receive end on each path; determining, based on the received acknowledgment packet, a data packet that needs to be retransmitted; and retransmitting the data packet that needs to be retransmitted.

The data packet that needs to be retransmitted may be retransmitted in either of the following two manners:
Manner 1: Determine a retransmission path based on transmission performance of each path, where the transmission performance includes one or more of a transmission delay, a packet loss rate, or a bit error rate; and retransmit, on the determined retransmission path, the data packet that needs to be retransmitted. Manner 2: Retransmit, on an original transmission path of the data packet that needs to be retransmitted, the data packet that needs to be retransmitted.

According to a second aspect, a data transmission method is further provided. The method includes: receiving a plurality of QUIC data packets that are sent by a transmit end on at least two paths, where each QUIC data packet includes a QUIC connection identifier and packet indication information, the QUIC connection identifiers in the plurality of QUIC data packets are the same, and the packet indication information in each QUIC data packet is used to indicate a packet number of the QUIC data packet on a transmission path; and determining, based on the packet indication information, whether data packets transmitted on the paths include a data packet that is not received.

Optionally, the method may further include: sending an acknowledgment packet to a transmit end, where the acknowledgment packet is used to indicate a data packet received by a receive end on each path.

Further, the sending an acknowledgment packet to the transmit end includes: sending a corresponding acknowledgment packet on each path.

According to a third aspect, a data transmission apparatus is provided. The apparatus includes units configured to implement the method provided in any one of the possible implementations of the first aspect, for example, a generation unit and a sending unit.

According to a fourth aspect, a data transmission apparatus is provided. The apparatus includes units configured to implement the method provided in any one of the possible implementations of the second aspect, for example, a receiving unit and a determining unit.

According to a fifth aspect, a data transmission apparatus is further provided. The apparatus includes a memory and a processor connected to the memory, where the memory is configured to store program code, and when the processor is configured to run or execute the program code stored in the memory, the method provided in any one of the possible implementations of the first aspect can be performed.

According to a sixth aspect, a data transmission apparatus is further provided. The apparatus includes a memory and a processor connected to the memory, where the memory is configured to store program code, and when the processor is configured to run or execute the program code stored in the memory, the method provided in any one of the possible implementations of the second aspect can be performed.

According to a seventh aspect, a computer-readable storage medium is further provided. The computer-readable storage medium stores an instruction; when the computer-readable storage medium runs on a computer, the computer is enabled to perform the method provided in any one of the first aspect or optional manners of the first aspect; or when the computer-readable storage medium runs on a computer, the computer is enabled to perform the method provided in any one of the second aspect or the optional manners of the second aspect.

According to an eighth aspect, a computer program product including an instruction is further provided. When the computer program product runs on a computer, the computer is enabled to perform the method provided in any one of the first aspect or optional manners of the first aspect; or when the computer program product runs on a computer, the computer is enabled to perform the method provided in any one of the second aspect or the optional manners of the second aspect.

According to a ninth aspect, a communications chip is further provided. The communications chip is applied to a communications device. The communications chip includes a processor, a memory, and a communications interface. The processor, the memory, and the communications interface are coupled by using a bus. The memory is configured to store a program instruction. The processor executes the program instruction stored in the memory, so that the communications device equipped with the communications chip can perform the method provided in any one of the possible implementations of the first aspect or the second aspect.

According to a tenth aspect, a data transmission system is further provided. The system includes a transmit end and a receive end. The transmit end is configured to perform the method provided in any one of the possible implementations of the first aspect, and the receive end is configured to perform the method provided in any one of the possible implementations of the second aspect.

### BRIEF DESCRIPTION OF DRAWINGS

FIG. 1 is a schematic diagram of an application scenario of a data transmission method according to an embodiment of the present invention;
FIG. 2 is a structural block diagram of a communications device according to an embodiment of the present invention;
FIG. 3 is a flowchart of a data transmission method according to an embodiment of the present invention;
FIG. 4 is a schematic diagram of a relationship between a QUIC connection and a stream according to an embodiment of the present invention;
FIG. 5 is a schematic structural diagram of a UDP data packet in which a QUIC data packet is encapsulated according to an embodiment of the present invention;
FIG. 6 is a schematic diagram of a format of an existing QUIC data packet header;
FIG. 7 is a schematic diagram of a format of a QUIC data packet header according to an embodiment of the present invention;
FIG. 8 is a schematic structural diagram of a data transmission apparatus according to an embodiment of the present invention;
FIG. 9 is a schematic structural diagram of another data transmission apparatus according to an embodiment of the present invention; and
FIG. 10 is a schematic structural diagram of a data transmission system according to an embodiment of the present invention.

### DESCRIPTION OF EMBODIMENTS

To make the objectives, technical solutions, and advantages of this application clearer, the following further describes implementations of this application in detail with reference to the accompanying drawings.

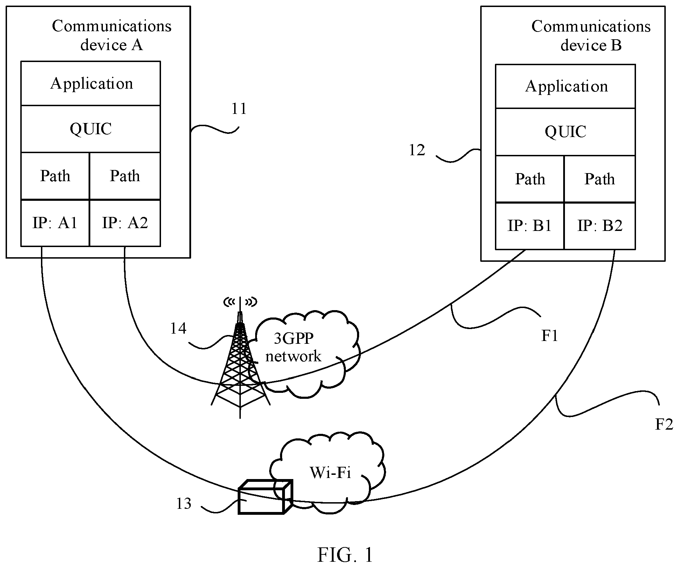

FIG. 1 is a schematic diagram of an application scenario of a data transmission method according to an embodiment of the present invention. Referring to FIG. 1, a transmit end 11 establishes a QUIC connection to a receive end 12 by using a radio access point. As shown in FIG. 1, data transmitted by using the QUIC connection between the transmit end (namely, a communications device A) 11 and the receive end (namely, a communications device B) 12 may be transmitted on at least two paths, and different paths may be based on different radio access technologies or may be based on a same radio access technology. The radio access technology includes, but is not limited to, Wi-Fi (Wireless Fidelity, wireless fidelity), 3G, 4G, 5G and a subsequently evolved technology that are of the 3GPP (3rd Generation Partnership Project, 3rd Generation Partnership Project), and the like. For example, in FIG. 1, there are two paths, namely, a path F1 and a path F2, between the transmit end 11 and the receive end 12. The path F1 is implemented based on a 3GPP network, and the path F2 is implemented based on a Wi-Fi technology.

When different paths are based on different radio access technologies, access may be performed by using different radio access points. For example, when Wi-Fi is used, access is performed by using a wireless router 13. When the radio access technology is 3G, 4G, 5G or a subsequently evolved technology of the 3GPP, the radio access point may be a base station 14 (for example, an eNode B).

Each path may be determined based on address information of the transmit end and address information of the receive end. The address information of the transmit end includes at least one of an IP address and a port number, and the address information of the receive end includes at least one of an IP address and a port number. If at least one of the address information of the receive end is different from that of the address information of the transmit end, the paths are different. For example, in the two paths between the transmit end 11 and the receive end 12 shown in FIG. 1, address information of the transmit end 11 of the path F1 is A2 (an IP address) and PORT 2, address information of the receive end of the path F1 is B1 (an IP address) and PORT 1, address information of the transmit end of the path F2 is A1 (an IP address) and PORT 1, and address information of the receive end of the path F2 is B2 (an IP address) and PORT 2.

When the transmit end transmits data to the receive end by using the QUIC connection, a packet header of each QUIC data packet carries a data packet number, and the transmit end sequentially sends, by using the QUIC connection, the data packets in ascending order of the data packet numbers. When data transmitted by using one QUIC connection is transmitted on a plurality of paths, for example, a data packet with a data packet number being 1 is transmitted on a path 1, and data packets with data packet numbers being 2 and 3 are transmitted on a path 2, because network environments of different paths may vary (for example, a data packet passes through different access devices on different paths, or when being transmitted on different paths, a data packet passes through different core network entities), transmission delays on different paths may vary. In this case, the receive end may first receive a data packet with a larger number, and then receive a data packet with a smaller number. When a time interval between receiving of the data packet with the larger number and receiving of the data packet with the smaller number is greater than a particular value, the receive end may consider that the data packet with the smaller number is lost and send, to the transmit end, an acknowledgment packet used to feed back a currently received data packet. If actually, the receive end temporarily does not receive the data packet with the smaller number merely due to a delay, but the transmit end determines, based on the acknowledgment packet, that the data packet with the smaller number is lost, and retransmits the data packet with the smaller number, transmission resources are wasted. If a time interval at which the receive end sends an acknowledgment packet is set to be excessively long, a buffer overflow of the receive end may be caused. In addition, when the receive end does not receive the data packet with the smaller number, during waiting, the receive end cannot submit another received data packet to an application layer in a timely manner. Consequently, a waiting time of a user is excessively long, and user experience is severely affected.

It should be noted that, in the scenario shown in FIG. 1, the transmit end 11 is a communications device sending data, and the receive end 12 is a communications device receiving data. In other words, the transmit end is relative to the receive end. For example, when the first communications device sends data to the second communications device, the first communications device is a transmit end, and the second communications device is a receive end. When the second communications device sends data to the first communications device, the second communications device is a transmit end, and the first communications device is a receive end. When the first communications device sends data to the second communications device and also receives data sent by the second communications device, each of the first communications device and the second communications device is both a transmit end and a receive end.

The communications device may be a terminal device or a server. The terminal device includes but is not limited to a mobile phone, a notebook computer, a personal computer, or the like.

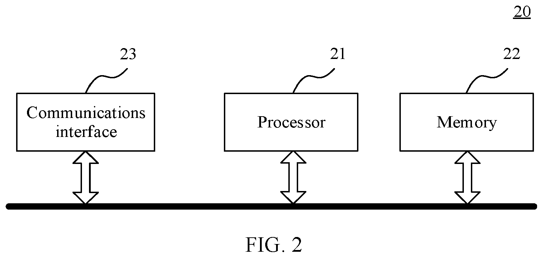

FIG. 2 is a schematic structural diagram of a communications device 20 according to an embodiment of the present invention. The communications device may be implemented as the receive end or the transmit end in FIG. 1 or is used as both the transmit end and the receive end.

Referring to FIG. 2, the communications device 20 may include components such as a processor 21 with one or more cores, a memory 22 including one or more computer-readable storage media, and a communications interface 23. The processor 21 may be connected to the memory 22 and the communications interface 23 by using a bus. A person skilled in the art may understand that the structure shown in FIG. 2 constitutes no limitation on the communications device 20. The communications device 20 may include more or fewer components than those shown in the figure, or combine some components, or have a different component arrangement. The processor 21 is a control center of the communications device 20, and is connected to each part of the communications device 20 by using various interfaces and lines. By running or performing a software program and/or an application program module stored in the memory 22, and invoking data stored in the memory 22, the processor 21 performs various functions of the communications device 20 and processes data, to implement overall monitoring on the communications device 20.

Optionally, the processor 21 may include one or more processing units, and the processing unit may be a central processing unit (Central Processing Unit, CPU), a network processor (Network Processor, NP), or the like.

The memory 22 may be configured to store various data such as various configuration parameters and a computer instruction. The computer instruction may be executed by the processor 21. The memory 22 may include a high-speed random access memory, and may also include a non-volatile memory such as at least one disk, a flash memory, or another volatile solid-state storage device. Correspondingly, the memory 22 may further include a memory controller, to provide access of the processor 21 to the memory 22.

The communications interface 23 may be a transceiver or a network interface. The transceiver may include a receiver Rx and a transmitter Tx. The transceiver may alternatively be implemented as a communications chip. The communications chip may include a receiving module, a transmit module, a modulation/demodulation module, and the like, and is configured to modulate/demodulate information and receive or send information by using a wireless signal.

When the communications device 20 is a transmit end, the processor 21 is configured to: generate a plurality of QUIC data packets, where each QUIC data packet includes a QUIC connection identifier and packet indication information, and the QUIC connection identifiers in the plurality of QUIC data packets are the same; and control the communications interface 23 to send the plurality of QUIC data packets on at least two paths, where the packet indication information in each QUIC data packet is used to indicate a packet number of the QUIC data packet on a transmission path.

When the communications device 20 is a receive end, the processor 21 is configured to: receive a plurality of QUIC data packets that are sent by a transmit end on at least two paths, where each QUIC data packet includes a QUIC connection identifier and packet indication information, the QUIC connection identifiers in the plurality of QUIC data packets are the same, and the packet indication information in each QUIC data packet is used to indicate a packet number of the QUIC data packet on a transmission path; and determine, based on the packet indication information, whether data packets transmitted on the paths include a data packet that is not received.

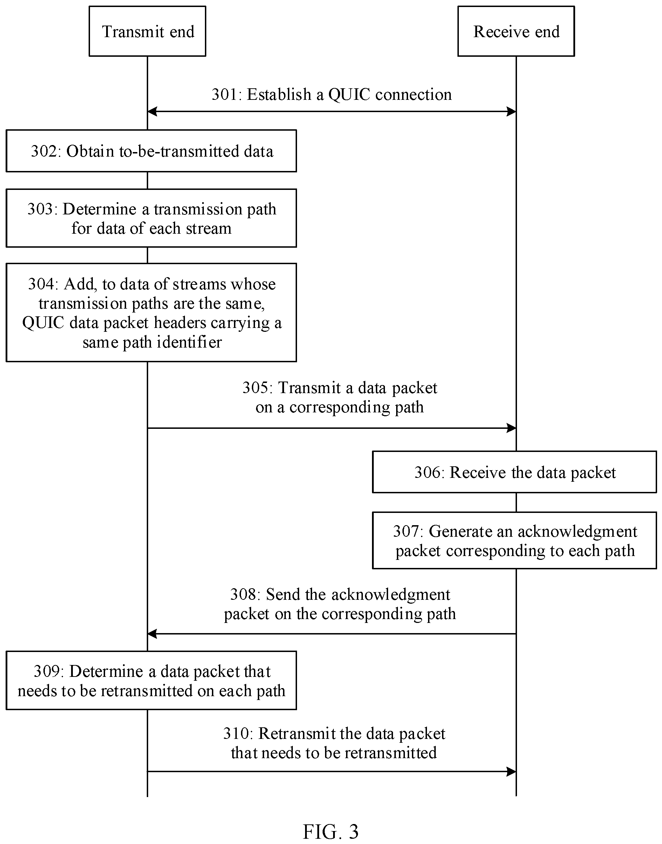

FIG. 3 is a flowchart of a data transmission method according to an embodiment of the present invention. The method is implemented based on the scenario shown in FIG. 1. Referring to FIG. 3, a procedure of the method includes the following steps.

301: The transmit end establishes a QUIC connection to the receive end.

Each QUIC connection has a unique QUIC ID (Identifier, identifier).

For a manner in which the transmit end establishes the QUIC connection to the receive end, refer to an existing connection establishment process, and detailed descriptions are omitted herein.

302: The transmit end obtains to-be-transmitted data.

In step 302, the to-be-transmitted data is application layer data. After obtaining the to-be-transmitted data, the transmit end performs segmentation and reassembly (Segmentation and Reassembly) on the to-be-transmitted data. Further, the to-be-transmitted data includes data of at least two streams. That segmentation and reassembly are performed on the to-be-transmitted data means that data of each stream is divided into frames. A frame is a minimum data unit in data transmission performed by using the QUIC connection, and a stream is a logical set of data transmitted by using the QUIC connection. During actual application, each stream has a unique stream identifier.

For example, a client accesses a web page, and a server sends all data on the web page to the client by using a QUIC connection. The web page usually includes a plurality of objects (object), for example, a text, a picture, and audio. Each object may be used as a stream. For example, an image object is used as a stream, an audio object is a used as stream, and a text object is a used as stream. Segmentation and reassembly are to further divide data of each stream into frames.

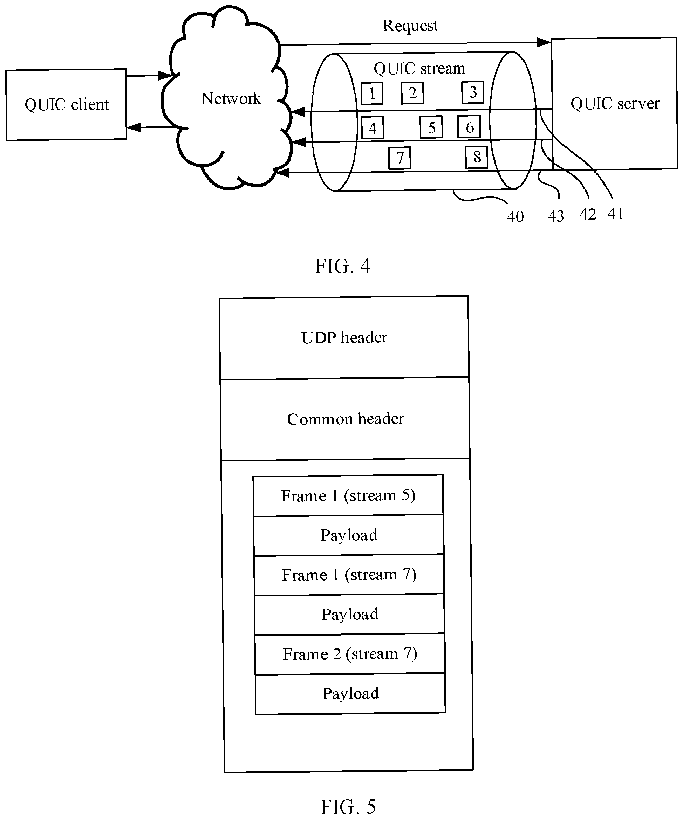

As shown in FIG. 4, data of three streams is transmitted by using one QUIC connection 40. Each stream includes a plurality of frames. For example, the first stream 41 includes frames 1 to 3, the second stream 42 includes frames 4 to 6, and the third stream 43 includes frames 7 and 8. It should be noted that, numbers of frames in FIG. 4 are merely used to distinguish between different frames, and do not imply a transmission order of the frames.

During implementation, when segmentation and reassembly are performed on the to-be-transmitted data, a limitation and a requirement on a data size of a QUIC data packet need to be considered. Specifically, a size of a QUIC data packet transmitted according to the IPv6 protocol is required not to exceed 1350 bytes, and a size of a QUIC data packet transmitted according to the IPv4 protocol is required not to exceed 1370 bytes. Segmentation and reassembly are performed on the to-be-transmitted data, to facilitate subsequent encapsulation of the data into QUIC data packets. Therefore, during segmentation and reassembly, a limitation and a requirement on a data size of the QUIC data packet need to be considered, and at least a size of a minimum data unit (namely, a frame) obtained after the division cannot exceed 1350 bytes or 1370 bytes.

Sizes of QUIC frames in a same stream may be the same. Sizes of QUIC frames in different streams may be the same or may be different.

303: The transmit end determines a transmission path for data of each stream.

In an implementation, when the to-be-transmitted data includes data of a plurality of streams, data of related streams may be transmitted on a same path. In other words, transmission paths of data of a plurality of related streams are determined as a same path. This may reduce impact of different transmission performance of different paths on data use. For example, video image data, audio data, and caption data in a same movie are respectively transmitted by using three streams of a QUIC connection, the video image data is transmitted by using one stream, the audio data is transmitted by using one stream, the caption data is transmitted by using one stream, and the three related streams are transmitted on a same path. For another example, during access to a web page, an image on the web page and a text description related to the image are respectively transmitted by using two streams of a QUIC connection, and the two related streams are transmitted on a same path. In this case, step 303 may include: determining whether streams of the QUIC connection are related to each other; and determining transmission paths of data of related streams as a same path.

Whether the streams are related to each other may be determined in the following manners:
Manner 1: A correlation between streams may be determined based on indication information carried in a packet header of an application layer of the to-be-transmitted data. The indication information may be a set value of a specified field. For example, the data of the related streams may carry a same symbol identifier. During actual application, the symbol identifier may be carried in a Content Type (content type) header field of a Hypertext Transfer Protocol (HTTP, HyperText Transfer Protocol) data packet. Correspondingly, the transmit end may determine that streams to which data having a same symbol identifier belongs are the related streams.
Manner 2: Whether the streams are related to each other is determined by using a preset association rule. The preset association rule includes an association relationship between the streams, and may be stored in a form of a list or a database. Further, the association relationship between the streams may be determined through big data analytics. For example, if data of two streams is usually associated for use, an association relationship is set for the data of the two streams. During actual application, the association relationship may be an association relationship between information in Content Type header fields of HTTP data packets. Correspondingly, the transmit end may first obtain information in Content Type header fields of HTTP data packets in two streams, and then perform matching between the information and each piece of association relationship information in the preset association rule. If the matching succeeds, it indicates that the two streams are related. If the matching fails, it indicates that the two streams are irrelevant. That the matching succeeds means that the preset association rule includes the association relationship between the information in the Content Type header fields of the HTTP data packets of the two streams.

In another implementation, the transmission path for each stream may be determined based on a transmission performance requirement, of each stream, on the transmission path. In this case, step 303 may include: Determine a transmission performance requirement of each stream, where the transmission performance requirement includes at least one of a transmission delay, a packet loss rate, or a bit error rate, and determine the transmission path for the data of each stream based on the transmission performance requirement of the stream. The transmission performance requirement of each stream may be determined in the following manner: The transmission performance requirement of each stream is obtained from a prestored correspondence between indication information of the stream and a transmission performance requirement. The indication information of the stream may be information in a Content Type (content type) header field of an HTTP data packet.

During implementation, for a transmission delay on each path, the transmit end may determine a transmission delay of each data packet based on a sending time of the sent data packet and a receiving time of the corresponding data packet in a received acknowledgment packet, and use a statistical value (for example, an average value) of transmission delays of a plurality of data packets transmitted on a same path as a transmission delay on the corresponding path. For a packet loss rate on each path, the transmit end may determine, based on an acknowledgment packet, a quantity of data packets received by the receive end, and then determine a packet loss rate on the corresponding path based on a quantity of data packets sent by the transmit end and the determined quantity of the data packets received by the receive end. For the bit error rate, the transmit end may determine a bit error rate on a corresponding path by obtaining bit error rate statistics from a bottom layer such as a physical layer through cross-layer communication in a protocol stack.

304: The transmit end adds, to data of streams whose transmission paths are the same, QUIC data packet headers carrying a same path identifier, to obtain QUIC data packets.

For a path on which a plurality of streams correspondingly exist, each data packet may include QUIC frames of at least two of the plurality of streams. For example, as shown in FIG. 5, a UDP data packet includes a UDP header (UDP Header), a common header (Common Header) (namely, a QUIC data packet header), and QUIC frames that belong to different streams, for example, a frame 1 in a stream 5, a frame 1 in a stream 7, and a frame 2 in the stream 7 in FIG. 5. A quantity of frames carried in each data packet may be set based on an actual requirement, and is not limited herein.

Streams to which QUIC frames included in a single QUIC data packet belong may be all streams corresponding to the path. In other words, a QUIC frame of each stream corresponding to the path is carried in each data packet. Alternatively, streams to which QUIC frames included in a single data packet belong may be some of all streams corresponding to the path. In addition, in each data packet, quantities of QUIC frames that belong to different streams may be the same or may be different.

In addition, a QUIC data packet header of each QUIC data packet carries a QUIC connection identifier and packet indication information. QUIC connection identifiers in QUIC data packets that are transmitted by using a same QUIC connection are the same. The packet indication information is used to indicate a packet number of a data packet on a transmission path. In other words, in this embodiment, the transmit end may separately sort data packets on each path. For example, sequence numbers of data packets on a path 1 start from 1 and increase in ascending order. Sequence numbers of data packets on a path 2 also start from 1 and increase in ascending order.

Further, the packet indication information may include a path identifier and a path packet number. The path identifier is used to indicate a transmission path of the data packet, and the path packet number is used to indicate a packet number of the data packet on the transmission path.

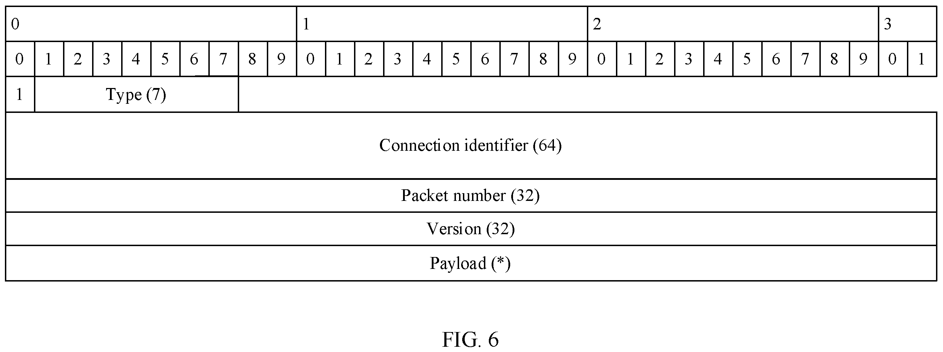

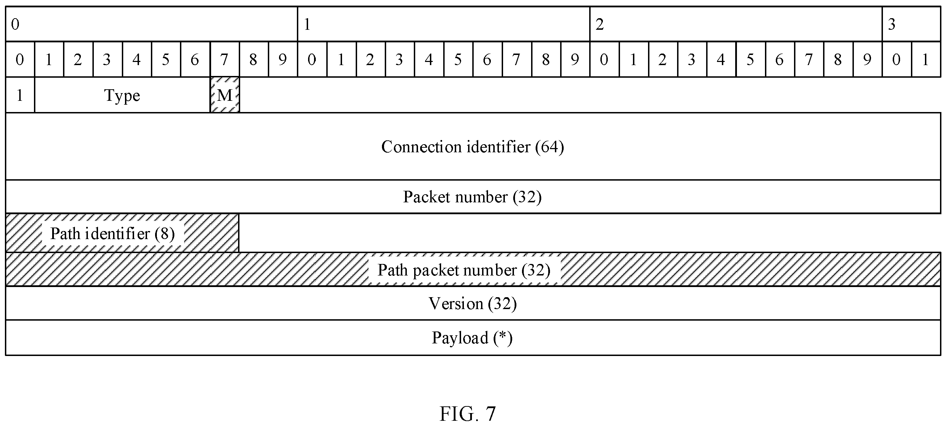

During actual application, a new field may be added to the packet header of the data packet to carry the packet indication information. For example, FIG. 6 shows a format of an existing QUIC data packet header, and FIG. 7 shows a format of an extended QUIC data packet header. As shown in FIG. 6, the QUIC data packet header further includes a type (Type) field, a connection identifier (Connection ID) field, a packet number (packet number) field, a version (Version) field, and a payload (Payload) field. The type field is used to carry a QUIC data packet type and other header field information, and may include 7 bits. The connection identifier field is used to indicate an identifier of a QUIC connection, and may use 64 bits. The packet number field is used to indicate a number of a data packet in all data packets transmitted by using the QUIC connection, and may use 32 bits. The version field is used to indicate a version number currently used by the QUIC, and may use 32 bits. The payload field is used to carry data that needs to be transmitted. As shown in FIG. 7, a path identifier field and a path packet number field are added to the extended QUIC data packet header. The path identifier field is used to indicate a transmission path of the data packet, and may use 8 bits. The path packet number field is used to indicate a packet number of the data packet on the transmission path, and may use 32 bits. In another embodiment, the path identifier field and the path packet number field may be combined into one field. In other words, only one field is used to carry the packet indication information.

It should be noted that, during actual application, actual paths corresponding to a same path identifier may change. For example, in a first time period, a path corresponding to a path identifier A is a path that is based on a 3GPP network, but in a second time period after the first time period, a path corresponding to the path identifier A is a path that is based on a Wi-Fi network. This is because a location of a terminal device may change, and transmission performance of a same network may also change at different moments, leading to a change in transmission conditions (for example, transmission delays or packet loss rates) on different paths. However, for streams that are determined to be transmitted on a same path, the streams are usually intended to be transmitted under a same transmission condition. Therefore, QUIC data packets carrying a same path identifier may be transmitted on a first transmission path in the first time period and be transmitted on a second transmission path in the second time period. Certainly, in one data transmission process, an actual path corresponding to a same path identifier may not change.

It should be noted that, a quantity of bits of each of the foregoing fields is only an example, and may be set based on an actual requirement.

Optionally, the extended QUIC data packet header may further carry a multipath identifier, used to indicate whether multipath transmission is used, in other words, whether data of a same QUIC connection is transmitted on more than one path. During implementation, 1 bit of a type field of an original QUIC data packet header may be used to carry the multipath identifier.

A plurality of QUIC data packets can be generated by performing step 302 to step 304.

305: The transmit end transmits a QUIC data packet on a corresponding path.

Step 305 includes:
adding a UDP packet header corresponding to a path identifier to the QUIC data packet, to obtain a UDP data packet;
adding an IP packet header to the UDP data packet, to obtain an IP data packet; and
sending the IP data packet based on the IP packet header and the UDP packet header.

The UDP packet header includes a source port number and a destination port number, and the IP packet header includes a source IP address and a destination IP address. That the IP data packet is sent based on the IP packet header and the UDP packet header means that the IP data packet is sent to a communications device, namely, the receive end, corresponding to the destination IP address and the destination port number.

As described in step 304, for QUIC data packets carrying a same path identifier, a UDP header and address information in an IP header that are added at a time point is different from those added at another time point. The transmit end may perform determining based on an actual situation (a transmission delay, a packet loss rate, or the like on a path).

306: The receive end receives, on each path corresponding to the QUIC connection, a data packet sent by the transmit end.

307: The receive end generates, based on packet information of the received data packet, an acknowledgment packet corresponding to each path.

During actual application, the acknowledgment packet includes a SACK (Selective Acknowledgment, selective acknowledgment) field, and the SACK field includes information about the received data packet.

It should be noted that, when an actual path corresponding to a same path identifier is constant, in step 307, the acknowledgment packets corresponding to the paths may be an acknowledgment packet on a same actual path, and the receive end may determine, based on the path identifiers or address information corresponding to the paths, whether data packets on a same path are received. When an actual path corresponding to a same path identifier is variable, in step 307, the acknowledgment packets corresponding to the paths are acknowledgment packets corresponding to a same path identifier. In other words, the receive end determines, based on the path identifiers, whether data packets sent on a same path are received.

308: The receive end sends the acknowledgment packet to the transmit end on the corresponding path.

309: The transmit end determines, based on the received acknowledgment packet, a data packet that needs to be retransmitted on each path.

For example, the transmit end may determine, based on the received acknowledgment packet, a data packet that is not received by the receive end and that is in the data packets sent on the paths; and then determine, according to a specified retransmission policy, a data packet that needs to be retransmitted and that is in the data packet that is not received by the receive end. The retransmission policy may include, but is not limited to, that an important data packet needs to be retransmitted, and an unimportant data packet does not need to be retransmitted.

310: The transmit end retransmits the data packet that needs to be retransmitted.

In an implementation, step 310 may include:
retransmitting, on an original transmission path of the data packet that needs to be retransmitted, the data packet that needs to be retransmitted.

In another implementation, step 310 may include:
determining a retransmission path based on transmission performance of each path; and
retransmitting, on the determined retransmission path, the data packet that needs to be retransmitted.

The transmission performance may be one or more of a transmission delay, a packet loss rate, or a bit error rate. For a manner of determining the transmission delay, the packet loss rate, or the bit error rate, refer to step 303, and details are not described herein again.

During actual application, the data packet that needs to be retransmitted may be retransmitted on a path with a shortest transmission delay, or the data packet that needs to be retransmitted may be retransmitted on a path with a lowest packet loss rate.

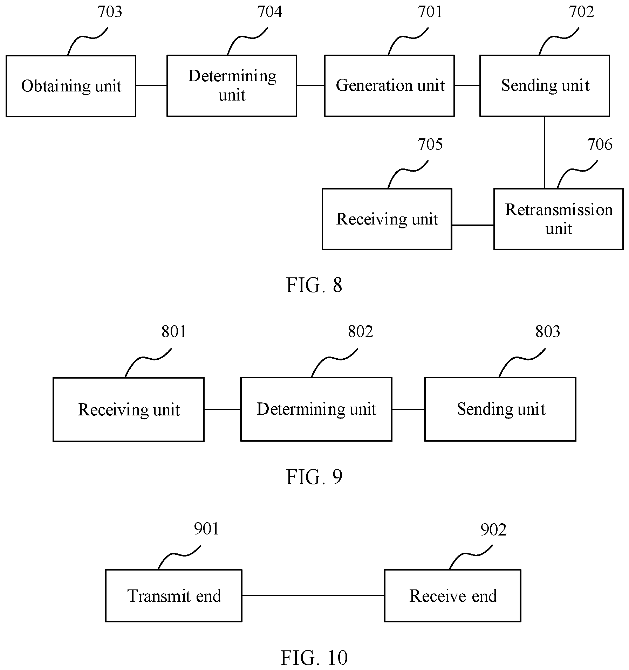

Referring to FIG. 8, an embodiment of the present invention further provides a data transmission apparatus. The data transmission apparatus may be implemented as all or a part of a communications device by using a dedicated hardware circuit or a combination of software and hardware. The apparatus includes a generation unit 701 and a sending unit 702. The generation unit 701 is configured to generate a plurality of QUIC data packets. Each QUIC data packet includes a QUIC connection identifier and packet indication information, and QUIC connection identifiers in the plurality of QUIC data packets are the same. The packet indication information includes a path identifier and a path packet number. The path identifier is used to indicate a transmission path of the data packet, and the path packet number is used to indicate a packet number of the data packet on the transmission path. The sending unit 702 is configured to send the QUIC data packet on transmission paths corresponding to the QUIC data packets. The transmission paths corresponding to the plurality of QUIC data packets include at least two paths.

Optionally, the apparatus further includes an obtaining unit 703 and a determining unit 704. The obtaining unit 703 is configured to obtain to-be-transmitted data. The to-be-transmitted data includes data of at least two streams of the QUIC connection. The determining unit 704 is configured to determine a transmission path for data of each stream. The generation unit 701 is configured to add, to data of streams whose transmission paths are the same, QUIC data packet headers carrying a same path identifier, to obtain the QUIC data packets.

In an implementation, the determining unit 704 is configured to: determine whether the streams are related to each other, and determine transmission paths of data of related streams as a same path. Further, the determining unit 704 is configured to: determine, based on an identifier carried in the data of each stream, whether the streams are related to each other; or determine, according to each preset association rule, whether the streams are related to each other.

In another implementation, the determining unit 704 is configured to: determine a transmission performance requirement of each stream, where the transmission performance requirement includes at least one of a transmission delay, a packet loss rate, or a bit error rate; and determine the transmission path for the data of each stream based on the transmission performance requirement of the stream.

Optionally, the apparatus further includes a receiving unit 705 and a retransmission unit 706. The receiving unit 705 is configured to receive an acknowledgment packet sent by a receive end, where the acknowledgment packet is used to indicate a data packet received by the receive end on each path. The retransmission unit 705 is configured to: determine, based on the received acknowledgment packet, a data packet that needs to be retransmitted; and retransmit the data packet that needs to be retransmitted.

Further, the retransmission unit 706 is configured to: determine a retransmission path based on transmission performance of each path, where the transmission performance includes one or more of a transmission delay, a packet loss rate, or a bit error rate; and retransmit, on the determined retransmission path, the data packet that needs to be retransmitted. Alternatively, the retransmission unit 706 is configured to retransmit, on an original transmission path of the data packet that needs to be retransmitted, the data packet that needs to be retransmitted.

For related details, refer to the method embodiments in FIG. 3 to FIG. 5, and FIG. 6 and FIG. 7.

It should be noted that the generation unit 701, the obtaining unit 702, and the determining unit 703 may be implemented by a processor, or by executing a program instruction in a memory by a processor. The sending unit 702 and the retransmission unit 705 may be implemented by a transmitter Tx or by a processor in combination with a transmitter Tx. The receiving unit 704 may be implemented by a receiver Rx or by a processor in combination with a receiver Rx.

Referring to FIG. 9, an embodiment of the present invention further provides another data transmission apparatus. The data transmission apparatus may be implemented as all or a part of a communications device by using a dedicated hardware circuit or a combination of software and hardware. The apparatus includes a receiving unit 801 and a determining unit 802. The receiving unit 801 is configured to receive a plurality of QUIC data packets that are sent by a transmit end on at least two paths. Each QUIC data packet includes a QUIC connection identifier and packet indication information. The QUIC connection identifiers in the plurality of QUIC data packets are the same. The packet indication information includes a path identifier and a path packet number. The path identifier is used to indicate a transmission path of the data packet. The path packet number is used to indicate a packet number of the data packet on the transmission path. The determining unit 802 is configured to determine, based on the packet indication information, whether the data packets transmitted on the paths include a data packet that is not received.

Optionally, the apparatus further includes a sending unit 803, configured to send an acknowledgment packet to the transmit end. The acknowledgment packet is used to indicate a data packet received by a receive end on each path.

Further, the sending unit 803 is configured to send a corresponding acknowledgment packet on each path.

For related details, refer to the method embodiments in FIG. 3 to FIG. 5, and FIG. 6 and FIG. 7.

It should be noted that, the determining unit 802 may be implemented by a processor, or implemented by executing a program instruction in a memory by a processor. The receiving unit 801 and the sending unit 803 may be implemented by a communications interface, or implemented by a communications interface in combination with a processor.

Referring to FIG. 10, an embodiment of the present invention further provides a data transmission system. The system includes a transmit end 901 and a receive end 902.

The system further includes a data transmission network, for example, a Wi-Fi network or a 3GPP communications network. Each data transmission network includes at least one radio access point such as a wireless router or a base station.

It may be noted that: When the data transmission apparatuses provided by the foregoing embodiments perform data transmission, only division of the foregoing function modules is taken as an example for illustration. During actual application, the foregoing functions can be allocated to different function modules and implemented based on a requirement. In other words, an inner structure of a device is divided into different function modules to implement all or some of the functions described above. In addition, the data transmission apparatuses provided in the foregoing embodiments and the data transmission method embodiments pertain to a same concept. For a specific implementation process of the data transmission apparatus, refer to the method embodiments. Details are not described herein again.

All or some of the foregoing embodiments may be implemented by using software, hardware, firmware, or any combination thereof. When a software program is used to implement the embodiments, all or some of the embodiments may be implemented in a form of a computer program product. The computer program product includes one or more computer program instructions. When the computer program instruction is loaded and executed on a computer, the procedure or functions according to the embodiments of the present invention are all or partially generated. The computer may be a general-purpose computer, a dedicated computer, a computer network, or another programmable apparatus. The computer instruction may be stored in a computer-readable storage medium or may be transmitted from a computer-readable storage medium to another computer-readable storage medium. For example, the computer instruction may be transmitted from a website, computer, server, or data center to another website, computer, server, or data center in a wired (for example, a coaxial cable, an optical fiber, or a twisted pair) or wireless (for example, infrared or microwave) manner. The computer-readable storage medium may be any usable medium accessible by the computer, or a data storage device, such as a server or a data center, integrating one or more usable media. The usable medium may be a magnetic medium (for example, a floppy disk, a hard disk, or a magnetic tape), an optical medium, a semiconductor medium (for example, a solid-state drive (SSD)), or the like.

A person of ordinary skill in the art may understand that all or some of the steps of the embodiments may be implemented by hardware or a program instructing related hardware. The program may be stored in a computer-readable storage medium. The storage medium may include a read-only memory, a magnetic disk, an optical disc, or the like.

The foregoing descriptions are merely optional embodiments of this application, but are not intended to limit this application. Any modification, equivalent replacement, or improvement made without departing from the spirit and principle of this application should fall within the protection scope of this application.

## Claims

1. A data transmission method, comprising:
generating a plurality of QUIC data packets, wherein each QUIC data packet comprises a QUIC connection identifier and packet indication information, and the QUIC connection identifiers in the plurality of QUIC data packets are the same; and
sending the plurality of QUIC data packets on at least two paths, wherein the packet indication information in each QUIC data packet is used to indicate a packet number of the QUIC data packet on a transmission path.

2. The method according to claim 1, wherein the generating a plurality of QUIC data packets comprises:
obtaining to-be-transmitted data, wherein the to-be-transmitted data packet comprises data of at least two streams of the QUIC connection;
determining a transmission path for data of each stream; and
adding, to data of streams whose transmission paths are the same, QUIC data packet headers carrying a same path identifier, to obtain the QUIC data packets.

3. The method according to claim 2, wherein the determining a transmission path for data of each stream comprises:
determining whether the streams are related to each other; and
determining transmission paths of data of related streams as a same path.

4. The method according to claim 3, wherein the determining whether the streams are related to each other comprises:
determining, based on an identifier carried in the data of each stream, whether the streams are related to each other; or
determining, according to a preset association rule, whether the streams are related to each other.

5. The method according to claim 2, wherein the determining a transmission path for data of each stream comprises:
determining a transmission performance requirement of each stream, wherein the transmission performance requirement comprises at least one of a transmission delay, a packet loss rate, or a bit error rate; and
determining the transmission path for the data of each stream based on the transmission performance requirement of the stream.

6. The method according to any one of claims 1 to 5, wherein the method further comprises:
receiving an acknowledgment packet sent by a receive end, wherein the acknowledgment packet is used to indicate a data packet received by the receive end on each path;
determining, based on the received acknowledgment packet, a data packet that needs to be retransmitted; and
retransmitting the data packet that needs to be retransmitted.

7. The method according to claim 6, wherein the retransmitting the data packet that needs to be retransmitted comprises:
determining a retransmission path based on transmission performance of each path, wherein the transmission performance comprises one or more of a transmission delay, a packet loss rate, or a bit error rate; and
retransmitting, on the determined retransmission path, the data packet that needs to be retransmitted; or
the retransmitting the data packet that needs to be retransmitted comprises:
retransmitting, on an original transmission path of the data packet that needs to be retransmitted, the data packet that needs to be retransmitted.

8. A data transmission method, comprising:
receiving a plurality of QUIC data packets that are sent by a transmit end on at least two paths, wherein each QUIC data packet comprises a QUIC connection identifier and packet indication information, the QUIC connection identifiers in the plurality of QUIC data packets are the same, and the packet indication information in each QUIC data packet is used to indicate a packet number of the QUIC data packet on a transmission path; and
determining, based on the packet indication information, whether data packets transmitted on the paths comprise a data packet that is not received.

9. The method according to claim 8, wherein the method further comprises:
sending an acknowledgment packet to the transmit end, wherein the acknowledgment packet is used to indicate a data packet received by a receive end on each path.

10. The method according to claim 9, wherein the sending an acknowledgment packet to the transmit end comprises:
sending a corresponding acknowledgment packet on each path.

11. A data transmission apparatus, comprising:
a generation unit, configured to generate a plurality of QUIC data packets, wherein each QUIC data packet comprises a QUIC connection identifier and packet indication information, and the QUIC connection identifiers in the plurality of QUIC data packets are the same; and
a sending unit, configured to send the plurality of QUIC data packets on at least two paths, wherein the packet indication information in each QUIC data packet is used to indicate a packet number of the QUIC data packet on a transmission path.

12. The apparatus according to claim 11, wherein the apparatus further comprises an obtaining unit and a determining unit, wherein
the obtaining unit is configured to obtain to-be-transmitted data, wherein the to-be-transmitted data comprises data of at least two streams of the QUIC connection;
the determining unit is configured to determine a transmission path for data of each stream; and
the generation unit is configured to add, to data of streams whose transmission paths are the same, QUIC data packet headers carrying a same path identifier, to obtain the QUIC data packets.

13. The apparatus according to claim 12, wherein the determining unit is configured to: determine whether the streams are related to each other; and determine transmission paths of data of related streams as a same path.

14. The apparatus according to claim 13, wherein the determining unit is configured to: determine, based on an identifier carried in the data of each stream, whether the streams are related to each other; or determine, according to each preset association rule, whether the streams are related to each other.

15. The apparatus according to claim 12, wherein the determining unit is configured to: determine a transmission performance requirement of each stream, wherein the transmission performance requirement comprises at least one of a transmission delay, a packet loss rate, or a bit error rate; and determine the transmission path for the data of each stream based on the transmission performance requirement of the stream.

16. The apparatus according to any one of claims 11 to 15, wherein the apparatus further comprises:
a receiving unit, configured to receive an acknowledgment packet sent by a receive end, wherein the acknowledgment packet is used to indicate a data packet received by the receive end on each path; and
a retransmission unit, configured to: determine, based on the received acknowledgment packet, a data packet that needs to be retransmitted; and retransmit the data packet that needs to be retransmitted.

17. The apparatus according to claim 16, wherein the retransmission unit is configured to: determine a retransmission path based on transmission performance of each path, wherein the transmission performance comprises one or more of a transmission delay, a packet loss rate, or a bit error rate; and retransmit, on the determined retransmission path, the data packet that needs to be retransmitted; or the retransmission unit is configured to retransmit, on an original transmission path of the data packet that needs to be retransmitted, the data packet that needs to be retransmitted.

18. A data transmission apparatus, comprising:
a receiving unit, configured to receive a plurality of QUIC data packets that are sent by a transmit end on at least two paths, wherein each QUIC data packet comprises a QUIC connection identifier and packet indication information, the QUIC connection identifiers in the plurality of QUIC data packets are the same, and the packet indication information in each QUIC data packet is used to indicate a packet number of the QUIC data packet on a transmission path; and
a determining unit, configured to determine, based on the packet indication information, whether data packets transmitted on the paths comprise a data packet that is not received.

19. The apparatus according to claim 18, wherein the apparatus further comprises:
a sending unit, configured to send an acknowledgment packet to the transmit end, wherein the acknowledgment packet is used to indicate a data packet received by a receive end on each path.

20. The apparatus according to claim 19, wherein the sending unit is configured to send a corresponding acknowledgment packet on each path.

21. A data transmission apparatus, comprising a memory and a processor connected to the memory, wherein the memory is configured to store program code, and when the processor is configured to run or execute the program code stored in the memory, the method according to any one of claims 1 to 7 is performed.

22. A data transmission apparatus, comprising a memory and a processor connected to the memory, wherein the memory is configured to store program code, and when the processor is configured to run or execute the program code stored in the memory, the method according to any one of claims 8 to 10 is performed.

23. A data transmission system, comprising a transmit end and a receive end, wherein the transmit end is configured to perform the method according to any one of claims 1 to 7; and the receive end is configured to perform the method according to any one of claims 8 to 10.
